# FASCICULE DE BREVET EUROPEEN

(11) **EP 2 402 144 B1**
(45) Date de publication et mention de la délivrance du brevet: **06.03.2013**
(21) Numéro de dépôt: 11171760.9
(22) Date de dépôt: 28.06.2011
(51) Int. Cl.: B29C 65/06, F16L 37/08, F16L 47/02, F16L 37/088

(54) **Dispositif et procédé de raccordement en particulier pour circuit de refroidissement d'eau de véhicule automobile.**
Anschlussvorrichtung und -verfahren, insbesondere für Wasserkühlkreislauf in einem Kraftfahrzeug
Connecting device and method, particularly for a motor vehicle water cooling circuit

(30) Priorité: 01.07.2010 FR 1055295
(43) Date de publication de la demande: 04.01.2012
(73) Titulaire: HUTCHINSON, 75008 Paris (FR)
(72) Inventeur: Faillu, Jean-Luc, 45700 VILLEMANDEUR (FR); Bronner, Florent, 45200 AMILLY (FR)
(74) Mandataire: Bolinches, Michel Jean-Marie

(56) Documents cités:
- EP-A1- 2 112 418
- DE-U1-202009 000 328
- FR-A1- 2 795 155
- FR-A1- 2 891 889
- US-B1- 6 832 785
- LAND W: "REIBSCHWEISSEN NACH DEM ROTATIONS- UND VIBRATIONSVERFAHREN", PLASTVERARBEITER, HUETHIG GMBH, HEIDELBERG, DE, vol. 34, no. 8, 1 août 1983 (1983-08-01), page 698/699, XP000677074, ISSN: 0032-1338

## Description

La présente invention concerne un dispositif de raccordement en particulier pour un circuit de refroidissement d'eau d'un véhicule automobile, et un procédé de raccordement, en particulier pour un tel circuit, d'un connecteur tubulaire mâle à saillie axiale à un connecteur tubulaire femelle à gorge axiale adaptée pour recevoir cette saillie.

D'une manière générale dans un circuit de refroidissement d'eau de véhicule automobile, il est connu pour raccorder un tuyau souple ou rigide (e.g. un tuyau élastomère, plastique ou métallique) à un embout mâle verrouillable du moteur ou du radiateur, d'utiliser un dispositif de raccordement incorporant un connecteur mâle à saillie périphérique axiale que l'on raccorde à ce tuyau, un connecteur femelle à gorge périphérique axiale recevant cette saillie et au moins un joint d'étanchéité en général de type torique plaqué contre cet embout mâle une fois ce dernier emmanché dans le connecteur femelle. On peut par exemple citer les documents FR-B1-2 891 889 et EP-B1-1 069 364 pour la description d'un tel dispositif de raccordement dans lequel l'extrémité de cette saillie est soudée en un cordon de soudure globalement radial (i.e. sensiblement en forme de couronne située dans un plan transversal) qui est localisé au fond de cette gorge.

Le document DE 20 2009000328 dévoile un dispositif de raccordement correspondant au préambule de la revendication 1.

Un inconvénient majeur des dispositifs de raccordement connus à embouts mâle et femelle soudés réside dans l'utilisation d'un unique cordon de soudure radial entre la saillie et la gorge précitées, ce qui peut générer des défauts d'étanchéité du fait des contraintes de température et de pression inhérentes au fonctionnement d'un circuit de refroidissement d'eau, ainsi que dans certains cas dans la nécessité de maintenir le ou chaque joint torique en position par des éléments séparés tels que des rondelles ou entretoises.

Un but de la présente invention est de proposer un dispositif de raccordement en particulier pour un circuit de refroidissement d'eau d'un véhicule automobile qui remédie à cet inconvénient, ce dispositif comprenant :
- un connecteur tubulaire mâle qui présente une saillie périphérique axiale et qui est destiné à être raccordé à un tuyau,
- un connecteur tubulaire femelle à gorge périphérique axiale recevant cette saillie et destiné à être raccordé de manière verrouillable à un embout tubulaire mâle, la gorge étant définie par un bord axial radialement interne et par un bord axial radialement externe et la saillie étant soudée à cette gorge suite à son insertion dans cette dernière, et
- au moins un joint d'étanchéité annulaire destiné à venir se plaquer radialement contre l'embout mâle,
le connecteur mâle étant soudé de préférence par friction circulaire (i.e. par rotation) au connecteur femelle lors de l'insertion de la saillie dans la gorge, en au moins deux cordons de soudure interne et externe respectivement localisés sur les deux faces internes en regard dudit bord de gorge interne et dudit bord de gorge externe.

A cet effet, un dispositif selon l'invention est tel que le connecteur mâle présente une portion périphérique axiale de guidage qui définit avec la saillie une rainure annulaire s'étendant dans la direction axiale et de largeur radiale inférieure à l'épaisseur dudit bord de gorge interne pour l'obtention sur ce dernier dudit cordon de soudure interne, cette portion de guidage étant guidée contre la face externe de ce bord de gorge interne lors de ladite insertion.

On notera que ce guidage permet de recentrer radialement les connecteurs mâle et femelle pendant l'opération de soudage, indépendamment des défauts de coaxialité de ces connecteurs.

On notera également que la gorge du connecteur femelle et cette rainure du connecteur mâle définissent des cavités susceptibles de recevoir d'une manière confinée les bavures de soudage.

On notera en outre que les deux cordons de soudure ainsi obtenus définissent des interfaces axiales de soudure (i.e. de forme globalement cylindrique, contrairement aux cordons radiaux en forme de couronne de l'art antérieur), et que ces cordons de soudure peuvent présenter une profondeur radiale de l'ordre de plusieurs dixièmes de millimètres (par exemple d'environ 0,6 mm) définissant ainsi en section axiale des « pavés » de soudure pouvant être qualifiés de radiaux en ce sens qu'ils s'étendent dans la profondeur radiale des deux bords de gorge.

Le raccordement obtenu entre ces connecteurs mâle et femelle est avantageusement compact, très rigide et en outre très robuste notamment vis-à-vis des efforts transversaux et de la résistance à la fatigue.

Dans la présente description, on entendra par les expressions « axialement interne » ou « axialement vers l'intérieur » une localisation selon l'axe de symétrie des connecteurs mâle et femelle qui est respectivement dirigée derrière ou axialement en deçà de la gorge du connecteur femelle ou de la saillie terminale du connecteur mâle selon le cas et, inversement, par les expressions « axialement externe » ou « axialement vers l'extérieur » une localisation selon cet axe qui est dirigée devant ou axialement au-delà de cette gorge ou de cette saillie.

Avantageusement, un épaulement interne de gorge peut être formé à l'entrée de la face interne dudit bord de gorge interne, cet épaulement interne étant apte à déterminer l'entrée en contact de la saillie avec la gorge avant son soudage et présentant une hauteur radiale définissant l'épaisseur radiale dudit cordon de soudure interne.

Selon une autre caractéristique de l'invention, ledit cordon de soudure interne peut s'étendre axialement sur la face radialement interne de la saillie, et ledit cordon de soudure externe peut s'étendre axialement sur au moins une portion axiale de soudage du connecteur mâle qui est située axialement en deçà de la saillie.

Selon une autre caractéristique de l'invention, ledit bord de gorge externe peut présenter une longueur axiale supérieure à celle dudit bord de gorge interne.

Selon un premier mode de réalisation de l'invention, ladite au moins une portion axiale de soudage comprend une face radialement externe d'un épaulement externe de saillie qui prolonge axialement vers l'intérieur la face radialement externe de la saillie et qui peut être soudé derrière un épaulement de gorge correspondant formé sur la face interne dudit bord de gorge externe.

Conformément à ce premier mode, le connecteur mâle peut comporter en outre une portion radiale de guidage qui est située axialement en deçà dudit épaulement externe de saillie et qui présente un épaulement externe de guidage venant buter axialement contre une extrémité dudit bord de gorge externe, de sorte à guider la saillie et à l'immobiliser vers le fond de la gorge.

Selon un second mode de réalisation de l'invention, ladite au moins une portion axiale de soudage comprend une face radialement externe d'une première collerette radiale qui est située axialement en deçà de la saillie et qui est soudée contre une zone de préférence à épaulement formée sur la face interne dudit bord de gorge externe.

Conformément à ce second mode, le connecteur mâle peut comporter en outre une seconde collerette radiale qui est située axialement en deçà de ladite première collerette et qui vient buter axialement contre une extrémité dudit bord de gorge externe, de sorte à immobiliser la saillie vers le fond de la gorge.

Avantageusement, ledit joint d'étanchéité peut être de type torique, ce joint étant alors rapporté librement entre les connecteurs mâle et femelle en étant calé axialement entre ces derniers. En variante, on notera que ce joint pourrait être non torique et solidaire de l'un au choix de ces deux connecteurs, par exemple par surmoulage sur le connecteur femelle.

A titre de matériaux utilisables pour ce joint d'étanchéité, on peut utiliser des EPDM, des élastomères fluorocarbonés (FKM) ou même des copolymères éthylène-acrylate de méthyle (EAM), par exemple.

A titre de matériaux utilisables pour les connecteurs mâle et femelle, on peut utiliser des matières plastiques telles que des polyamides (e.g. PA 6.6) ou des polyesters (e.g. polybutylène téréphtalate), par exemple.

Un procédé de raccordement selon l'invention, en particulier pour un circuit de refroidissement d'eau d'un véhicule automobile, a pour objet le raccordement d'un connecteur tubulaire mâle qui présente une saillie périphérique axiale et qui est destiné à être raccordé à un tuyau, à un connecteur tubulaire femelle qui présente une gorge périphérique axiale adaptée pour recevoir cette saillie et qui est destiné à être raccordé de manière verrouillable à un embout tubulaire mâle, la gorge étant définie par un bord axial radialement interne et par un bord axial radialement externe, au moins un joint d'étanchéité annulaire destiné à venir se plaquer radialement contre l'embout mâle étant interposé entre ces deux connecteurs.

Selon l'invention, ce procédé comprend successivement :
a) un guidage du connecteur mâle à l'entrée de la gorge via une portion périphérique axiale de guidage qui définit avec la saillie une rainure axiale annulaire de largeur radiale inférieure à celle dudit bord de gorge interne, cette portion de guidage étant guidée contre la face externe de ce bord de gorge interne jusqu'à ce qu'une extrémité radiale de la saillie parvienne au contact d'un épaulement interne de gorge formé à l'entrée de la face interne dudit bord de gorge interne, puis
b) lors de l'insertion axiale de la saillie vers le fond de la gorge, un soudage d'une face radialement interne de la saillie radialement contre la face interne dudit bord de gorge interne et concomitamment un soudage contre la face interne dudit bord de gorge externe d'au moins une portion axiale de soudage du connecteur mâle située axialement en deçà de la saillie, ces deux soudages étant réalisés de préférence par friction.

D'autres caractéristiques, avantages et détails de la présente invention ressortiront à la lecture de la description suivante de plusieurs exemples de réalisation de l'invention, donnés à titre illustratif et non limitatif, ladite description étant réalisée en référence avec les dessins joints, parmi lesquels :
la figure 1 est une vue schématique partielle en demi-section axiale d'un dispositif de raccordement selon le premier mode de l'invention, dans une phase de guidage du procédé de raccordement de ses connecteurs mâle et femelle,
la figure 2 est une vue schématique partielle en demi-section axiale du dispositif de la figure 1 finalement obtenu suite au soudage de ses connecteurs mâle et femelle, montrant en outre le joint d'étanchéité rapporté entre ces connecteurs et contre l'embout mâle,
la figure 3 est une vue schématique partielle en demi-section axiale d'un dispositif de raccordement selon le second mode de l'invention, dans une phase initiale de guidage avant contact des connecteurs mâle et femelle,
la figure 4 est une vue schématique partielle en demi-section axiale du dispositif de la figure 3 dans une phase ultérieure de contact avant soudage entre ces connecteurs,
la figure 5 est une vue de détail en demi-section axiale et à plus grande échelle du dispositif de la figure 4 montrant l'enfoncement radial de la saillie par rapport au bord de gorge interne dans cette phase de contact avant soudage,
la figure 6 est une vue schématique partielle en demi-section axiale du dispositif de la figure 5 dans une phase initiale de soudage entre les connecteurs, et
la figure 7 est une vue schématique partielle en demi-section axiale du dispositif de la figure 6 en fin de soudage entre ces connecteurs.

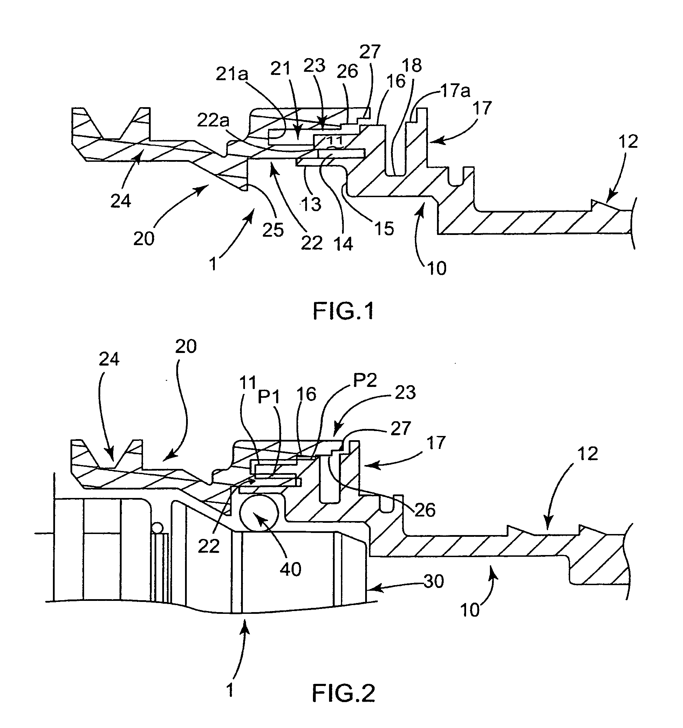

Le dispositif de raccordement 1 de la figure 1 est notamment utilisable dans un circuit de refroidissement d'eau d'un véhicule automobile, et il comprend selon ce premier mode de l'invention :
- un connecteur tubulaire mâle 10 qui présente en son extrémité axialement externe une saillie axiale périphérique 11 de section axiale sensiblement rectangulaire et, à proximité de son extrémité axialement interne, un tronçon en queue de sapin 12 pour le raccordement de connecteur 10 à un tuyau venant l'enserrer,
- un connecteur tubulaire femelle 20 qui présente, en son extrémité axialement externe, une gorge périphérique 21 s'étendant dans la direction axiale et recevant cette saillie 11 entre ses deux bords axiaux radialement interne 22 et externe 23 (le bord 23 étant sensiblement plus long que le bord 22) et, à proximité de son extrémité axialement interne, un tronçon de verrouillage 24 destiné à être raccordé de manière verrouillable à un embout tubulaire mâle 30 (visible à la figure 2) via un organe de verrouillage (non illustré) par exemple de type épingle insérable dans des lumières en arc de cercle du tronçon 24, et
- un joint d'étanchéité 40 qui dans cet exemple de réalisation est rapporté librement entre les connecteurs 10 et 20 et présente une forme torique, ce joint étant destiné à venir se plaquer radialement contre l'embout mâle 30.

Le connecteur mâle 10 comporte selon l'invention, radialement vers l'intérieur et en regard de la saillie 11, une portion périphérique axiale de guidage 13 qui définit avec la saillie 11 une rainure annulaire axiale 14 de largeur radiale inférieure à l'épaisseur du bord de gorge 22 en vue de former un cordon de soudure interne P1 entre la saillie 11 et le bord 22, et qui est destinée à être guidée contre la face externe de ce bord 22 lors de l'insertion de la saillie 11 dans la gorge 21. Cette portion axiale de guidage 13 se termine axialement au-delà de la saillie 11, et elle se prolonge axialement vers l'intérieur dans l'exemple des figures 1 et 2 par un épaulement radial 15 destiné à caler le joint 40 contre un épaulement radial 25 analogue que présente en regard le connecteur femelle 20.

Axialement en deçà de la saillie 11 sont en outre successivement formés sur le connecteur mâle 10, axialement vers l'intérieur de sa saillie 11 :
- un épaulement externe de saillie 16 qui prolonge axialement vers l'intérieur la face radialement externe de la saillie 11 et qui est destiné à être soudé derrière un premier épaulement de gorge 26 correspondant formé sur la face interne du bord de gorge 23, en une portion axiale de soudage P2 (i.e. destiné à former un cordon de soudure externe) définie par la face radialement externe de cet épaulement de saillie 16, et
- une portion radiale de guidage 17 qui est reliée à l'épaulement de saillie 16 par une rainure radiale 18 et qui présente un épaulement externe de guidage 17a destiné à buter axialement contre un second épaulement de gorge 27 prolongeant le premier 26 et se terminant par l'extrémité du bord de gorge externe 23, de sorte à guider la saillie 11 et à l'immobiliser vers le fond 21 a de la gorge 21.

Comme visible à la figure 1, le bord de gorge interne 22 a sa face interne qui présente à son extrémité libre un épaulement interne de gorge 22a contre lequel vient buter l'extrémité radiale de la saillie 11 avant son soudage et qui présente une hauteur radiale définissant l'épaisseur radiale du cordon de soudure interne P1 lors de l'insertion de la saillie 11 dans la gorge 21, comme illustré à la figure 2.

On voit en effet à la figure 2 que l'insertion axiale de la saillie 11 jusqu'au fond 21 a de la gorge 21 s'accompagne d'un soudage par friction circulaire de la saillie 11, d'une part, sur la face interne du bord 22 derrière l'épaulement 22a en formant un pavé de soudage interne P1 s'étendant radialement à l'interface de la saillie 11 et du bord 22 et axialement entre cet épaulement 22a et le fond de gorge 21 a, et, d'autre part, sur la face interne du bord 23 derrière le premier épaulement 26 en formant un pavé de soudage externe P2 s'étendant radialement à l'interface de l'épaulement de saillie 16 et du bord 23. Est également illustré à la figure 2 le montage en butée de la portion radiale de guidage 17 contre ce bord 23, via son épaulement de guidage 17a venant sensiblement au contact du second épaulement de gorge 27.

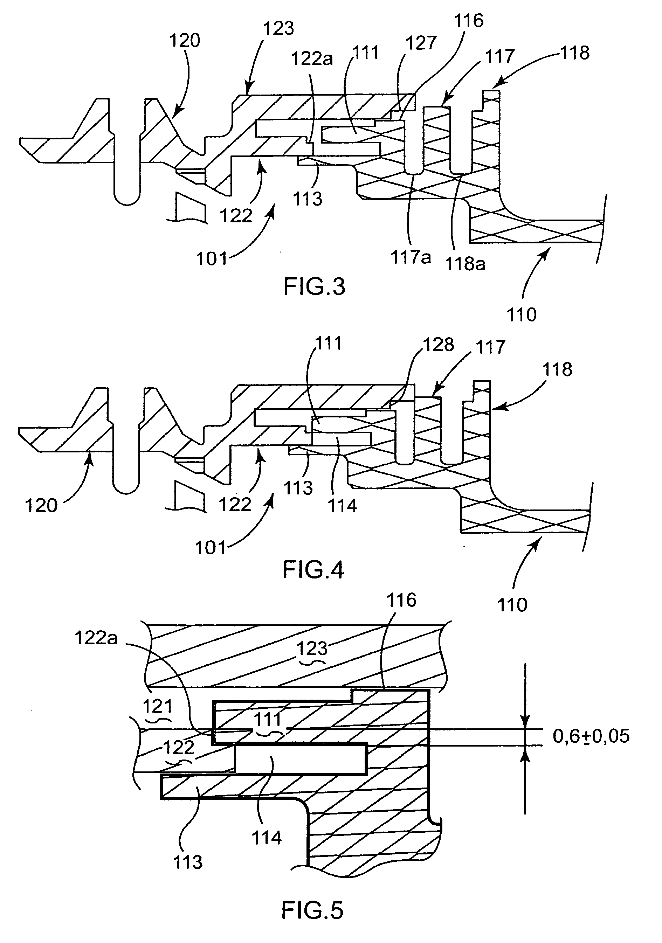

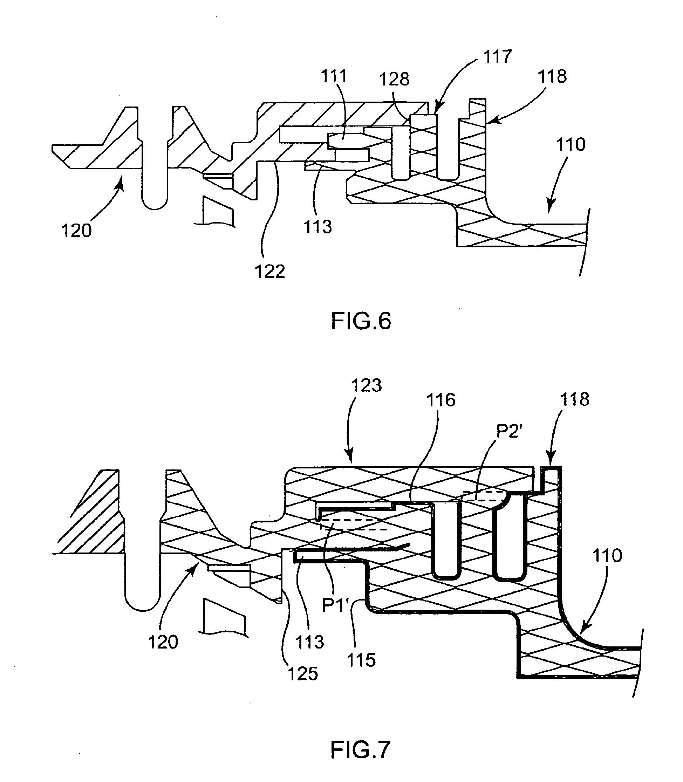

Le dispositif de raccordement 101 selon le second mode de l'invention illustré aux figures 3 à 7 se différencie essentiellement de celui des figures 1 et 2, en ce que le connecteur mâle 110 n'est pas soudé au bord de gorge externe 123 du connecteur femelle 120 en son épaulement externe 116 prolongeant sa saillie 111, mais en la face radialement externe d'une première collerette radiale 117 qui est située axialement en deçà de la saillie 111 et qui, comme visible à la figure 7, est finalement soudée par friction contre une zone 127 à épaulement 128 formée sur la face interne du bord 123. Cette première collerette 117 est reliée à l'épaulement 116 par une première rainure radiale 117a et, dans l'exemple des figures 3 à 7, sa face radialement externe présente un diamètre légèrement plus élevé que celui de cet épaulement 116. En effet, comme visible à la figure 7 à l'issue du soudage de cette première collerette 117 radialement contre le bord 123, l'épaulement 116 est en contact (sans soudure) avec le bord 123 alors que le cordon de soudure externe P2' (illustré schématiquement par des pointillés) forme un pavé radial de soudure empiétant en partie sur l'épaisseur de ce bord 123.

De plus, le connecteur mâle 110 comporte une seconde collerette radiale 118 qui est située axialement en deçà de la première collerette 117 en étant séparée de celle-ci par une seconde rainure radiale 118a et qui vient buter axialement en fin de soudage contre l'extrémité du bord 123, de sorte à immobiliser la saillie 111 vers le fond 121 a de la gorge 121. Plus précisément, on voit que la seconde collerette 118 a sa face radialement externe qui présente un diamètre légèrement plus élevé que celui de la première collerette 117, et que cette seconde collerette 118 vient buter contre l'épaulement terminal 128 du bord 123 en fin de course de soudage.

Comme illustré à la figure 7 et à l'instar du premier mode de l'invention illustré aux figures 1 et 2, le cordon de soudure interne P1' (illustré schématiquement par des pointillés) peut présenter par exemple une épaisseur radiale de 0,6 ± 0,05 mm, cette épaisseur étant notamment définie par la différence de diamètre existant entre la face interne du bord de gorge 122 au-delà de l'épaulement interne 122a formé à son entrée (analogue à l'épaulement 22a) et la face radialement interne de la saillie 111.

Après le guidage de la saillie 111 illustré à la figure 3 via la portion axiale de guidage 113 (analogue à la portion 13 précitée et définissant avec la saillie 111 une rainure axiale annulaire 114 similaire à la rainure 14) et son entrée en contact avec l'épaulement 122a montrée aux figures 4 et 5 (ce guidage et cette entrée en contact étant réalisés de manière analogue à celle décrite ci-dessus en référence au premier mode de l'invention), on procède comme illustré aux figures 6 et 7 au double soudage « radial » du connecteur mâle 110 sur les deux bords de gorge 122 et 123 avec une course axiale de soudage de plusieurs mm qui est par exemple comprise entre 3 et 10 mm.

Quant au joint torique 40, il est intercalé comme à la figure 2 entre les connecteurs mâle 110 et femelle 120 entre deux épaulements radiaux respectifs 115 et 125 de ces derniers.

## Revendications

1. Dispositif de raccordement (1, 101) en particulier pour un circuit de refroidissement d'eau d'un véhicule automobile, le dispositif comprenant :
- un connecteur tubulaire mâle (10, 110) qui présente une saillie périphérique axiale (11, 111) et qui est destiné à être raccordé à un tuyau,
- un connecteur tubulaire femelle (20, 120) qui présente une gorge périphérique axiale (21, 121) recevant cette saillie et qui est destiné à être raccordé de manière verrouillable à un embout tubulaire mâle (30), la gorge étant définie par un bord axial radialement interne (22, 122) et par un bord axial radialement externe (23, 123) et la saillie étant soudée à cette gorge suite à son insertion dans cette dernière, et
- au moins un joint d'étanchéité annulaire (40) destiné à venir se plaquer radialement contre l'embout mâle,
le connecteur mâle étant soudé de préférence par friction circulaire au connecteur femelle lors de l'insertion de la saillie dans la gorge, en au moins deux cordons de soudure interne (P1, P1') et externe (P2, P2') respectivement localisés sur les deux faces internes en regard dudit bord de gorge interne et dudit bord de gorge externe,
**caractérisé en ce que** le connecteur mâle (10, 110) présente une portion périphérique axiale de guidage (13, 113) qui définit avec la saillie (11, 111) une rainure annulaire (14) s'étendant dans la direction axiale et de largeur radiale inférieure à l'épaisseur dudit bord de gorge interne (22, 122) pour l'obtention sur ce dernier dudit cordon de soudure interne (P1, P1'), cette portion de guidage étant guidée contre la face externe de ce bord de gorge interne lors de ladite insertion.

2. Dispositif de raccordement (1, 101) selon la revendication 1, **caractérisé en ce qu'**un épaulement interne de gorge (22a, 122a) est formé à l'entrée de la face interne dudit bord de gorge interne (22, 122), cet épaulement interne étant apte à déterminer l'entrée en contact de la saillie (11, 111) avec la gorge (21, 121) avant son soudage et présentant une hauteur radiale définissant l'épaisseur radiale dudit cordon de soudure interne (P1, P1').

3. Dispositif de raccordement (1, 101) selon une des revendications précédentes, **caractérisé en ce que** ledit cordon de soudure interne (P1, P1') s'étend axialement sur la face radialement interne de la saillie (11, 111), et **en ce que** ledit cordon de soudure externe (P2, P2') s'étend axialement sur au moins une portion axiale de soudage (16, 117) du connecteur mâle (10, 110) qui est située axialement en deçà de la saillie.

4. Dispositif de raccordement (1) selon la revendication 3, **caractérisé en ce que** ladite au moins une portion axiale de soudage (16) comprend une face radialement externe d'un épaulement externe de saillie (16) qui prolonge axialement vers l'intérieur la face radialement externe de la saillie (11) et qui est soudé derrière un épaulement de gorge (26) correspondant formé sur la face interne dudit bord de gorge externe (23).

5. Dispositif de raccordement (1) selon la revendication 4, **caractérisé en ce que** le connecteur mâle (10) comporte en outre une portion radiale de guidage (17) qui est située axialement en deçà dudit épaulement externe de saillie (16) et qui présente un épaulement externe de guidage (17a) venant buter axialement contre une extrémité dudit bord de gorge externe (23), de sorte à guider la saillie (11) et à l'immobiliser vers le fond (21 a) de la gorge (21).

6. Dispositif de raccordement (101) selon la revendication 3, **caractérisé en ce que** ladite au moins une portion axiale de soudage (117) comprend une face radialement externe d'une première collerette radiale (117) qui est située axialement en deçà de la saillie (111) et qui est soudée contre une zone (127) de préférence à épaulement (128) formée sur la face interne dudit bord de gorge externe (123).

7. Dispositif de raccordement (101) selon la revendication 6, **caractérisé en ce que** le connecteur mâle (110) comporte en outre une seconde collerette radiale (118) qui est située axialement en deçà de ladite première collerette (117) et qui vient buter axialement contre une extrémité (128) dudit bord de gorge externe (123), de sorte à immobiliser la saillie (111) vers le fond (121a) de la gorge (121).

8. Dispositif de raccordement (1, 101) selon une des revendications précédentes, **caractérisé en ce que** ledit bord de gorge externe (23, 123) présente une longueur axiale supérieure à celle dudit bord de gorge interne (22, 122).

9. Dispositif de raccordement (1, 101) selon une des revendications précédentes, **caractérisé en ce que** ledit joint d'étanchéité (40) est de type torique et est rapporté librement entre les connecteurs mâle (10, 110) et femelle (20, 120) en étant calé axialement entre ces derniers, ou bien est de type non torique et est fixé à l'un de ces connecteurs par exemple par surmoulage sur le connecteur femelle.

10. Procédé de raccordement, en particulier pour un circuit de refroidissement d'eau d'un véhicule automobile, d'un connecteur tubulaire mâle (10, 110) qui présente une saillie périphérique axiale (11, 111) et qui est destiné à être raccordé à un tuyau, à un connecteur tubulaire femelle (20, 120) qui présente une gorge périphérique axiale (21, 121) adaptée pour recevoir cette saillie et qui est destiné à être raccordé de manière verrouillable à un embout tubulaire mâle (30), la gorge étant définie par un bord axial radialement interne (22, 122) et par un bord axial radialement externe (23, 123), au moins un joint d'étanchéité annulaire (40) destiné à venir se plaquer radialement contre l'embout mâle étant interposé entre ces deux connecteurs, **caractérisé en ce qu'**il comprend successivement :
a) un guidage du connecteur mâle à l'entrée de la gorge via une portion périphérique axiale de guidage (13, 113) qui définit avec la saillie une rainure axiale annulaire (14, 114) de largeur radiale inférieure à celle dudit bord de gorge interne, cette portion de guidage étant guidée contre la face externe de ce bord de gorge interne jusqu'à ce qu'une extrémité radiale de la saillie parvienne au contact d'un épaulement interne de gorge (22a, 122a) formé à l'entrée de la face interne dudit bord de gorge interne, puis
b) lors de l'insertion axiale de la saillie vers le fond de la gorge, un soudage (P1, P1') d'une face radialement interne de la saillie radialement contre la face interne dudit bord de gorge interne et concomitamment un soudage (P2, P2') contre la face interne dudit bord de gorge externe d'au moins une portion axiale de soudage (16, 117) du connecteur mâle située axialement en deçà de la saillie, ces deux soudages étant réalisés de préférence par friction.

11. Procédé de raccordement selon la revendication 10, **caractérisé en ce que** ledit joint d'étanchéité (40) est de type torique et est rapporté librement entre les connecteurs mâle (10, 110) et femelle (20, 120) en étant calé axialement entre ces derniers, ou bien est de type non torique et est fixé à l'un de ces connecteurs par exemple par surmoulage sur le connecteur femelle.

## Claims

1. Connecting device (1,101), particularly for a water cooling circuit of a motor vehicle, the device comprising:
- a male tubular connector (10, 110) which has an axial peripheral projection (11, 111) and which is intended to be connected to a hose,
- a female tubular connector (20, 120) which has an axial peripheral groove (21, 121) receiving this projection, and which is intended to be connected in lockable manner to a male tubular endpiece (30), the groove being defined by a radially inner axial edge (22, 122) and by a radially outer axial edge (23, 123) and the projection being welded to this groove following its insertion in the latter, and
- at least one annular sealing joint (40) adapted to be pressed radially against the male endpiece,
the male connector being welded preferably by circular friction to the female connector during the insertion of the projection in the groove, at at least two inner (P1, P1') and outer (P2, P2') weld beads located respectively on the two facing inner surfaces of said inner groove edge and said outer groove edge,
**characterised in that** the male connector (10, 110) comprises an axial peripheral guide portion (13, 113) which defines with the projection (11, 111) an annular channel (14) extending in the axial direction and having a radial width that is less than the thickness of said inner groove edge (22, 122) in order to obtain said inner weld bead (P1, P1') on the latter, said guide portion being guided against the outer surface of this inner groove edge during said insertion.

2. Connecting device (1, 101) according to claim 1, **characterised in that** an inner groove shoulder (22a, 122a) is formed at the entrance to the inner surface of said inner groove edge (22, 122), this inner shoulder being adapted to determine the contacting of the projection (11, 111) with the groove (21, 121) before it is welded and having a radial height that defines the radial thickness of said inner weld bead (P1, P1').

3. Connecting device (1, 101) according to one of the preceding claims, **characterised in that** the said inner weld bead (P1, P1') extends axially over the radially inner surface of the projection (11, 111), and **in that** the outer weld bead (P2, P2') extends axially over at least one axial weld portion (16, 117) of the male connector (10, 110) which is located axially short of the projection.

4. Connecting device (1) according to claim 3, **characterised in that** the at least one axial weld portion (16) comprises a radially outer surface of an outer projection shoulder (16) which extends the radially outer surface of the projection (11) in the axially inward direction and which is welded behind a corresponding groove shoulder (26) formed on the inner surface of said outer groove edge (23).

5. Connecting device (1) according to claim 4, **characterised in that** the male connector (10) further comprises a radial guide portion (17) which is located axially short of said outer projection shoulder (16) and which has an outer guide shoulder (17a) abutting axially on one end of said outer groove edge (23), so as to guide the projection (11) and immobilise it towards the base (21 a) of the groove (21).

6. Connecting device (101) according to claim 3, **characterised in that** the at least one axial weld portion (117) comprises a radially outer surface of a first radial flange (117) which is located axially short of the projection (111) and which is welded to a zone (127) preferably with a shoulder (128) formed on the inner surface of said outer groove edge (123).

7. Connecting device (101) according to claim 6, **characterised in that** the male connector (110) further comprises a second radial flange (118) which is located axially short of said first flange (117) and which abuts axially on one end (128) of said outer groove edge (123), so as to immobilise the projection (111) towards the base (121a) of the groove (121).

8. Connecting device (1, 101) according to one of the preceding claims, **characterised in that** the outer groove edge (23, 123) has an axial length that is greater than that of the inner groove edge (22, 122).

9. Connecting device (1, 101) according to one of the preceding claims, **characterised in that** the sealing joint (40) is of the toroidal type and is mounted freely between the male (10, 110) and female (20, 120) connectors, being wedged axially between the latter, or is of the non-toroidal type and is fixed to one of these connectors, for example by overmoulding onto the female connector.

10. Connecting process, particularly for a water cooling circuit of an automotive vehicle, for connecting a male tubular connector (10, 110) which has an axial peripheral projection (11, 111) and which is intended to be connected to a hose, to a female tubular connector (20, 120) which has an axial peripheral groove (21, 121) adapted to receive this projection and which is intended to be connected in lockable manner to a male tubular endpiece (30), the groove being defined by a radially inner axial edge (22, 122) and by an radially outer axial edge (23, 123), at least one annular sealing joint (40) adapted to be pressed radially against the male endpiece being interposed between these two connectors, **characterised in that** it comprises, successively:
a) guiding the male connector as it enters the groove via an axial peripheral guide portion (13, 113) which defines with the projection an annular axial channel (14, 114), the radial width of which is less than that of said inner groove edge, this guide portion being guided against the outer surface of this inner groove edge until a radial end of the projection makes contact with an inner groove shoulder (22a, 122a) formed at the entrance to the inner surface of said inner groove edge, then
b) during the axial insertion of the projection towards the base of the groove, welding (P1, P1') a radially inner surface of the projection radially against the inner surface of said inner groove edge and, concomitantly, welding (P2, P2') at least one axial weld portion (16, 117) of the male connector located axially short of the projection to the inner surface of said outer groove edge, these two welds preferably being carried out by friction.

11. Connecting process according to claim 10, **characterised in that** the said sealing joint (40) is of the toroidal type and is mounted freely between the male (10, 110) and female (20, 120) connectors, being wedged axially between the latter, or is of the non-toroidal type and is fixed to one of these connectors, for example by overmoulding onto the female connector.

## Patentansprüche

1. Anschlussvorrichtung (1, 101), insbesondere für einen Wasserkühlkreislauf in einem Kraftfahrzeug, umfassend:
einen rohrförmigen männlichen Verbinder (10, 110), der einen umlaufenden axialen Vorsprung (11, 111) aufweist und der dazu bestimmt ist, an einen Schlauch angeschlossen zu werden,
einen rohrförmigen weiblichen Verbinder (20, 120), der eine umlaufende axiale Öffnung (21, 121) aufweist, in welche der Vorsprung eingreift und welche dazu bestimmt ist, mit einem rohrförmigen männlichen Ansatzstück (30) verriegelbar verbunden zu werden, wobei die Öffnung radial durch einen axialen inneren Rand (22, 122) und durch einen axialen äußeren Rand (23, 123) begrenzt ist, und wobei der Vorsprung nach seiner Einführung in die Öffnung mit letzterer verschweißt wird, und
mindestens einen Dichtungsring (40), welcher dazu bestimmt ist, radial gegen das männliche Ansatzstück gepresst zu werden,
wobei der männliche Verbinder bevorzugt durch Rotations-Reibschweißen mit dem weiblichen Verbinder während des Einsetzens des Vorsprungs in die Öffnung verbunden wird, und mindestens zwei innere (P1, P1') beziehungsweise äußere (P2, P2') Schweißnähte, die sich an den beiden gegenüberliegenden Innenflächen des inneren und des äußeren Randes der Öffnung befinden,
**dadurch gekennzeichnet, dass** der männliche Verbinder (10, 110) einen umlaufenden axialen Führungsabschnitt (13, 113) aufweist, welcher mit dem Vorsprung (11, 111) eine Ringnut (14) bildet, die sich in axialer Richtung erstreckt und für die Ausbildung der inneren Schweißnaht (P1, P1') eine geringere radiale Weite aufweist als die Stärke des inneren Randes der Öffnung (22, 122), wobei dieser Führungsabschnitt während der Einführung gegen die äußere Oberfläche des inneren Randes der Öffnung geführt wird.

2. Anschlussvorrichtung (1, 101) gemäß Anspruch 1, **dadurch gekennzeichnet, dass** eine innere Schulter (22a, 122a) eingangs der Innenseite der Öffnung (22, 122) ausgebildet und geeignet ist, den Eintritt der Berührung zwischen dem Vorsprung (11, 111) und der Öffnung (21, 121) vor dem Verschweißen zu bestimmen, und eine radiale Höhe aufweist, welche die radiale Stärke der inneren Schweißnaht (P1, P1') bestimmt.

3. Anschlussvorrichtung (1, 101) gemäß einem der vorstehenden Ansprüche, **dadurch gekennzeichnet, dass** die innere Schweißnaht (P1, P1') sich axial über die radial innere Oberfläche des Vorsprungs (11, 111) erstreckt, und dass die äußere Schweißnaht (P2, P2') sich axial mindestens über einen axialen Schweißbereich (16, 117) des männlichen Verbinders (10, 110) erstreckt, der axial in Einführungsrichtung hinter dem Vorsprung angeordnet ist.

4. Anschlussvorrichtung (1) gemäß Anspruch 3, **dadurch gekennzeichnet, dass** der mindestens eine axiale Schweißbereich (16) eine Fläche aufweist, die radial außerhalb einer äußeren Schulter (16) des Vorsprungs liegt, und welche die radial äußere Fläche des Vorsprungs (11) zur Innenseite hin axial verlängert und welche in Einführungsrichtung hinter einer entsprechenden auf der Innenseite der äußeren Randes der Öffnung (23) angeordneten Schulter (23) der Öffnung (23) verschweißt ist,.

5. Anschlussvorrichtung (1) gemäß Anspruch 4, **dadurch gekennzeichnet, dass** der männliche Verbinder (10) weiterhin ein radiales Führungsteil (17) aufweist, welches axial hinter der äußeren Schulter (16) des Vorsprungs angeordnet ist und welches eine äußere Führungsschulter (17a) darstellt, welche axial gegen ein Endstück der äußeren Öffnung (23) stößt, um den Vorsprung (11) zu führen und ihn in Richtung auf die Rückwand (21a) der Öffnung (21) zu blockieren.

6. Anschlussvorrichtung (101) gemäß Anspruch 3, **dadurch gekennzeichnet, dass** der mindestens eine axiale Schweißbereich (117) eine radial äußere Fläche eines Flansches (117) aufweist, welche axial in Einführungsrichtung hinter dem Vorsprung (111) angeordnet ist und welche mit einem auf der Innenfläche der äußeren Öffnung (123) ausgebildeten Bereich (127), vorzugsweise einer Schulter (128), verschweißt ist.

7. Anschlussvorrichtung (101) gemäß Anspruch 6, **dadurch gekennzeichnet, dass** der männliche Verbinder (110) unter anderem einen zweiten radialen Flansch (118) aufweist, welcher sich axial in Einführungsrichtung hinter dem ersten Flansch (117) befindet, und welcher axial gegen ein Endstück (128) der äußeren Öffnung (123) stößt, um den Vorsprung (111) in Richtung auf die Rückwand (121a) der Öffnung (121) zu blockieren.

8. Anschlussvorrichtung (1, 101) gemäß einem der vorstehenden Ansprüche, **dadurch gekennzeichnet, dass** der äußere Rand der Öffnung (23, 123) eine größere axiale Länge aufweist als der innere Rand der Öffnung (22, 122).

9. Anschlussvorrichtung (1, 101) gemäß einem der vorstehenden Ansprüche, **dadurch gekennzeichnet, dass** die Dichtung (40) vom Typ eines O-Rings ist und zwischen dem männlichen (10, 110) und dem weiblichen (20, 120) Verbinder lose eingebracht und axial zwischen den letzteren befestigt wird, oder sie ist nicht vom Typ eines O-Rings und ist an einem der Verbinder fixiert, beispielsweise durch eine Anformung an dem weiblichen Verbinder.

10. Anschlussverfahren, insbesondere für einen Wasserkühlkreislauf in einem Kraftfahrzeug, mit einem rohrförmigen männlichen Verbinder (10, 110), welcher einen umlaufenden axialen Vorsprung (11, 111) aufweist und welcher dazu bestimmt ist, an einen Schlauch angeschlossen zu werden, an einen rohrförmigen weiblichen Verbinder (20, 120), welcher eine umlaufende axiale Öffnung (21, 121) aufweist, welche angepasst ist, diesen Vorsprung aufzunehmen, und welche dazu bestimmt ist, mit einem rohrförmigen männlichen Ansatzstück (30) verriegelbar verbunden zu werden, wobei die Öffnung radial durch einen axialen inneren Rand (22, 122) und durch einen axialen äußeren Rand (23, 123) begrenzt ist, und mindestens einen Dichtungsring (40) aufweist, welcher dazu bestimmt ist, radial gegen das männliche Ansatzstück gepresst zu werden, welches zwischen die beiden Verbinder eingefügt ist, **dadurch gekennzeichnet, dass** es aufeinanderfolgend Nachstehendes umfasst:
a) eine Führung des männlichen Verbinders am Eingang der Öffnung über einen umlaufenden axialen Führungsabschnitt (13, 113), die mit dem Vorsprung eine axiale Ringnut (14, 114) mit einer geringeren radialen Weite als derjenigen des inneren Randes der Öffnung definiert, welcher Führungsabschnitt gegen die äußere Oberfläche des inneren Randes der Öffnung geführt wird, bis ein radiales Endstück des Vorsprungs in Kontakt mit einer inneren Schulter (22a, 122a) der Öffnung gelangt, die am Eingang der Innenfläche des Randes der Öffnung ausgebildet ist, sodann
b) nach dem axialen Einführen des Vorsprungs in Richtung auf die Rückwand der Öffnung, eine Verschweißung (P1, P1') einer radial inneren Oberfläche des radialen Vorsprungs gegen die Innenoberfläche des innneren Randes der Öffnung, zusammen mit einer Verschweißung (P2, P2') gegen die Innenfläche des äußeren Randes der Öffnung mit mindestens einem axialen Schweißabschnitt (16, 117) des männlichen Verbinders, der sich axial in Einführungsrichtung hinter dem Vorsprung befindet, wobei diese beiden Verschweißungen bevorzugt durch Reibschweißen realisiert werden.

11. Anschlussverfahren gemäß Anspruch 10, **dadurch gekennzeichnet, dass** der Dichtungsring (40) vom Typ eines O-Rings ist und zwischen dem männlichen (10, 110) und dem weiblichen (20, 120) Verbinder lose eingebracht und axial zwischen den letzteren befestigt wird, oder er ist nicht vom Typ eines O-Rings und ist an einem der Verbinder fixiert, beispielsweise durch eine Anformung an dem weiblichen Verbinder.
